# EUROPEAN PATENT APPLICATION

(11) **EP 4 629 364 A1**
(43) Date of publication of application: **08.10.2025**
(21) Application number: 24211134.2
(22) Date of filing: 06.11.2024
(51) Int. Cl.: H01M 10/04

(54) **BATTERY PACK MANUFACTURING APPARATUS AND BATTERY PACK MANUFACTURING METHOD**

(30) Priority: 05.04.2024 KR 20240046966
(71) Applicant: Hyundai Motor Company, Seoul 06797 (KR); Kia Corporation, Seocho-gu Seoul 06797 (KR)
(72) Inventor: KIM, Kyung Mo, 18280 Hwaseong-si (KR); PARK, Jong Gyu, 18280 Hwaseong-si (KR); KO, Gun Woo, 18280 Hwaseong-si (KR); KIM, Chan Sol, 18280 Hwaseong-si (KR)
(74) Representative: Viering, Jentschura & Partner mbB Patent- und Rechtsanwälte

(57) **Abstract**

A battery pack manufacturing apparatus (10) includes a main pressing jig (100) including two main pressing parts configured to be movable toward or away from each other, and an auxiliary pressing jig (200) including two auxiliary pressing parts configured to be movable toward or away from each other, in which the main pressing jig and the auxiliary pressing jig are configured such that the main pressing part passes through the auxiliary pressing part when the main pressing part or the auxiliary pressing part moves in a first direction (W) in a state in which the main pressing part and the auxiliary pressing part are disposed to overlap each other in a second direction (H) intersecting the first direction.

## Description

### CROSS-REFERENCE TO RELATED APPLICATION

This application claims the benefit of Korean Patent Application No. 10-2024-0046966 filed in the Korean Intellectual Property Office on April 5, 2024, the entire contents of which are incorporated herein by reference.

### BACKGROUND

### (a) Technical Field

The present disclosure relates to a battery pack manufacturing apparatus and a battery pack manufacturing method, more particularly, to the battery pack manufacturing apparatus and method capable of gripping and pressing a battery required to manufacture a battery pack.

### (b) Description of the Related Art

Typically, a battery pack is manufactured by a process of manufacturing a battery module having surface pressure formed by coupling endplates to two opposite surfaces of a stack, which is made by stacking a plurality of batteries, and then accommodating a plurality of battery modules in a pack casing. Meanwhile, recently, attempts have been made to improve an energy density of the battery pack by minimizing a volume occupied by the endplate, a sensing block, and the like provided in the battery module in the related art by directly mounting the stack having a structure, in which the plurality of batteries is stacked, without mounting the battery module in the pack casing.

The new type of battery pack, which is manufactured by the above-mentioned method, is assuredly advantageous in terms of energy density in comparison with the battery pack mounted with the battery module, but has a disadvantage in terms of a manufacturing process. That is, in the case of the structure in which the battery stack is directly disposed in the pack casing, there is no configuration for applying surface pressure to two opposite surfaces of the battery stack. For this reason, there is a problem in that the stacked structure of the battery stack collapses without being maintained in the pack casing unless a separate action is performed.

### SUMMARY

Accordingly, an object to be achieved by the present disclosure is to smoothly manufacture a new type of battery pack by maintaining a shape of a battery stack seated in a pack casing during a process of manufacturing the battery pack by disposing the battery stack in the pack casing.

In order to achieve the above-mentioned object, one aspect of the present disclosure provides a battery pack manufacturing apparatus including: a main pressing jig including two main pressing parts provided to face each other in a first direction W and configured to be movable toward or away from each other; and an auxiliary pressing jig provided at one side of the main pressing jig and including two auxiliary pressing parts provided to face each other in the first direction W and configured to be movable toward or away from each other, in which the main pressing jig and the auxiliary pressing jig are configured such that the main pressing part passes through the auxiliary pressing part when the main pressing part or the auxiliary pressing part moves in the first direction W in a state in which the main pressing part and the auxiliary pressing part are disposed to overlap each other in a second direction H intersecting the first direction W.

The main pressing part may include a main pressing block including a main pressing surface that faces the other main pressing part that faces the main pressing part in the first direction W, the auxiliary pressing part may include an auxiliary pressing block including an auxiliary pressing surface that faces the other auxiliary pressing part that faces the auxiliary pressing part in the first direction W, and a width of the main pressing block in the second direction H may be larger than a width of the auxiliary pressing block in the second direction H.

The main pressing block may be provided as a plurality of main pressing blocks spaced apart from one another in a third direction A intersecting the first direction W and the second direction H, the auxiliary pressing block may be provided as a plurality of auxiliary pressing blocks spaced apart from one another in the third direction A, and the plurality of main pressing blocks and the plurality of auxiliary pressing blocks may be provided so as not to overlap one another in the third direction A when the battery pack manufacturing apparatus is viewed in a state in which the plurality of main pressing blocks and the plurality of auxiliary pressing blocks are spaced apart from one another in the first direction W when the plurality of main pressing blocks and the plurality of auxiliary pressing blocks are disposed to overlap one another in the second direction H.

The main pressing blocks and the auxiliary pressing blocks may be disposed alternately in the third direction A.

A sum of widths of the plurality of main pressing blocks in the third direction A may be larger than a sum of widths of the plurality of auxiliary pressing blocks in the third direction A.

The main pressing part may further include a main coupling concave-convex portion having a shape protruding or recessed from the main pressing surface of the main pressing block.

The auxiliary pressing part may further include an auxiliary coupling concave-convex portion having a shape protruding or recessed from the auxiliary pressing surface of the auxiliary pressing block.

The main coupling concave-convex portion may be provided on each of the plurality of main pressing blocks.

The auxiliary coupling concave-convex portion may be provided on each of the plurality of auxiliary pressing blocks.

A width in the third direction A of the main pressing block provided to be relatively close to a central region based on the third direction A between the two main pressing blocks in the main pressing part may be equal to or larger than a width in the third direction A of the main pressing block provided to be relatively distant from the central region based on the third direction A between the two main pressing blocks in the main pressing part.

The two auxiliary pressing parts may be a first auxiliary pressing part and a second auxiliary pressing part, the first auxiliary pressing part and the second auxiliary pressing part may each include an auxiliary pressing body including the auxiliary pressing block, the auxiliary pressing body of the first auxiliary pressing part may include: a first-first extension region provided at one side of the auxiliary pressing jig based on the first direction W and extending in the second direction H; a first-second extension region extending from an end of the first-first extension region based on the second direction H to the other side based on the first direction W; and a first-third extension region extending from the first-second extension region and including the auxiliary pressing block, and the auxiliary pressing body of the second auxiliary pressing part may include: a second-first extension region provided at the other side of the auxiliary pressing jig based on the first direction W and extending in the second direction H; a second-second extension region extending from an end of the second-first extension region based on the second direction H to one side based on the first direction W; and a second-third extension region extending from the second-second extension region and including the auxiliary pressing block.

At least a part of the first-second extension region and at least a part of the second-second extension region may be provided to face each other in the second direction H.

The first-third extension region may include: a first-third-first extension region extending in the second direction H from an end of the first-second extension region based on the first direction W; a first-third-second extension region extending in the first direction W from an end of the first-third-first extension region based on the second direction H; and a first-third-third extension region extending in the second direction H from an end of the first-third-second extension region based on the first direction W and including the auxiliary pressing surface.

The second-third extension region may extend in the second direction H from an end of the second-second extension region based on the first direction W and include the auxiliary pressing surface.

The auxiliary pressing jig may further include a cylinder part including: a first cylinder part configured to be movable in the first direction W and configured to press the first auxiliary pressing part from the outside based on the first direction W; and a second cylinder part configured to be movable in the first direction W and configured to press the second auxiliary pressing part from the outside based on the first direction W.

The first cylinder part may be configured to press the auxiliary pressing body of the first auxiliary pressing part in a direction toward the second auxiliary pressing part, and the second cylinder part may be configured to press the auxiliary pressing body of the second auxiliary pressing part in a direction toward the first auxiliary pressing part.

The auxiliary pressing jig may further include an elastic member provided between the auxiliary pressing body provided in the first auxiliary pressing part and the auxiliary pressing body provided in the second auxiliary pressing part, the elastic member being configured to press the first auxiliary pressing part and the second auxiliary pressing part in a direction in which the first-first extension region and the second-first extension region move away from each other.

The first cylinder part may be configured to be movable between i) a state in which when the first cylinder part moves in the second direction H, the first auxiliary pressing part is also movable by interference between the first auxiliary pressing part and the first cylinder part and ii) a state in which the first cylinder part is spaced apart from the first auxiliary pressing part, and the second cylinder part may be configured to be movable between i) a state in which when the second cylinder part moves in the second direction H, the second auxiliary pressing part is also movable by interference between the second auxiliary pressing part and the second cylinder part and ii) a state in which the second cylinder part is spaced apart from the second auxiliary pressing part.

In order to achieve the above-mentioned object, another aspect of the present disclosure provides a battery pack manufacturing method, which uses the battery pack manufacturing apparatus in which the main pressing part includes a main pressing block including a main pressing surface that faces the other main pressing part that faces the main pressing part in the first direction W, and the auxiliary pressing part includes an auxiliary pressing block including an auxiliary pressing surface that faces the other auxiliary pressing part that faces the auxiliary pressing part in the first direction W, the battery pack manufacturing method including: a preparation step of preparing first and second battery units each including a battery stack having a structure, in which a plurality of batteries is stacked, and preparing a casing member having an accommodation space capable of accommodating the first battery unit and the second battery unit; a first-first battery unit gripping step of gripping the first battery unit by allowing the main pressing surfaces of the main pressing blocks provided in the two main pressing parts to press two opposite surfaces of the first battery unit by operating the main pressing jig in a direction in which the two main pressing parts move toward each other; a first battery unit seating step of seating the first battery unit, which is gripped in the first-first battery unit gripping step, on the casing member; and a first-second battery unit gripping step of gripping the first battery unit by allowing the auxiliary pressing surfaces of the auxiliary pressing blocks provided in the two auxiliary pressing parts to press the two opposite surfaces of the first battery unit, which is seated on the casing member in the first battery unit seating step, by operating the auxiliary pressing jig in a direction in which the two auxiliary pressing parts move toward each other.

The battery pack manufacturing method may further include: a first main jig releasing step of moving the main pressing jig away from the first battery unit by operating the main pressing jig in a direction in which the two main pressing parts move away from each other in a state in which the auxiliary pressing jig grips the first battery unit after the first-second battery unit gripping step.

The first battery unit may further include an endplate provided on a lateral surface of the battery stack and including a first concave-convex portion having a protruding or recessed shape, the main pressing part may further include a main coupling concave-convex portion having a shape protruding or recessed from the main pressing surface of the main pressing block and having a shape corresponding to the first concave-convex portion, and the main coupling concave-convex portion may be inserted into the first concave-convex portion or the first concave-convex portion may be inserted into the main coupling concave-convex portion in the first-first battery unit gripping step.

The endplate may further include a second concave-convex portion provided separately from the first concave-convex portion and having a protruding or recessed shape, the auxiliary pressing part may further include an auxiliary coupling concave-convex portion having a shape protruding or recessed from the auxiliary pressing surface of the auxiliary pressing block and having a shape corresponding to the second concave-convex portion, and the auxiliary coupling concave-convex portion may be inserted into the second concave-convex portion or the second concave-convex portion may be inserted into the auxiliary coupling concave-convex portion in the first-second battery unit gripping step.

The second direction H may be an upward/downward direction, and a region, in which the main coupling concave-convex portion is inserted into the first concave-convex portion or the first concave-convex portion is inserted into the main coupling concave-convex portion in the first-first battery unit gripping step, may be positioned below a region in which the auxiliary coupling concave-convex portion is inserted into the second concave-convex portion or the second concave-convex portion is inserted into the auxiliary coupling concave-convex portion in the first-second battery unit gripping step.

The first battery unit may further include an endplate provided on a lateral surface of the battery stack and including a plurality of guide protruding regions having shapes protruding outward, and the main pressing block may press a section of the lateral surface of the endplate disposed between the plurality of guide protruding regions in the first-first battery unit gripping step.

A region, in which the main coupling concave-convex portion is inserted into the first concave-convex portion or the first concave-convex portion is inserted into the main coupling concave-convex portion in the first-first battery unit gripping step, may be formed in a section between the plurality of guide protruding regions.

The first battery unit may further include an endplate provided on a lateral surface of the battery stack and including a plurality of guide protruding regions having shapes protruding outward, the second direction H may be an upward/downward direction, and the auxiliary pressing block may press a section of the lateral surface of the endplate disposed above the plurality of guide protruding regions in the first-second battery unit gripping step.

A region, in which the auxiliary pressing block presses the lateral surface of the endplate in the first-second battery unit gripping step, may be formed within a width of the plurality of guide protruding regions in the first direction W.

The battery pack manufacturing method may further include: a second-first battery unit gripping step of gripping the second battery unit by allowing the main pressing blocks provided in the two main pressing parts to press two opposite surfaces of the second battery unit by operating the main pressing jig in the direction in which the two main pressing parts move toward each other; a second battery unit seating step of seating the second battery unit, which is gripped in the second-first battery unit gripping step, on the casing member; and a second-second battery unit gripping step of gripping the second battery unit by allowing the auxiliary pressing blocks provided in the two auxiliary pressing parts to press the two opposite surfaces of the second battery unit, which is seated on the casing member in the second battery unit seating step, by operating the auxiliary pressing jig in the direction in which the two auxiliary pressing parts move toward each other.

The battery pack manufacturing method may further include: a second main jig releasing step of moving the main pressing jig away from the second battery unit by operating the main pressing jig in a direction in which the two main pressing parts move away from each other in a state in which the auxiliary pressing jig grips the second battery unit after the second-second battery unit gripping step; and an extension member disposing step of disposing an extension member between the first battery unit and the second battery unit so that the extension member supports a lateral surface of the first battery unit and a lateral surface of the second battery unit.

The battery pack manufacturing method may further include: an auxiliary jig releasing step of moving the auxiliary pressing jig, which grips the first battery unit, and the auxiliary pressing jig, which grips the second battery unit, respectively away from the first battery unit and the second battery unit after the extension member disposing step.

A groove region having a recessed shape may be formed in a lateral surface of an extension member body region of the extension member, and the groove region of the extension member may be provided to face the auxiliary pressing block of the auxiliary pressing jig in the extension member disposing step.

When a direction intersecting the first direction W and the second direction H is a third direction A, a minimum value of a width in the third direction A of the groove region of the extension member may be equal to or larger than a maximum value of a width in the third direction A of the auxiliary pressing block facing the groove region in the extension member disposing step.

According to the present disclosure, it is possible to smoothly manufacture the new type of battery pack by maintaining the shape of the battery stack seated in the pack casing during the process of manufacturing the battery pack by disposing the battery stack in the pack casing.

### BRIEF DESCRIPTION OF THE DRAWINGS

FIG. 1 is a perspective view illustrating a battery pack manufacturing apparatus according to the present disclosure.
FIG. 2 is a perspective view illustrating a main pressing jig of the battery pack manufacturing apparatus in FIG. 1.
FIG. 3 is a perspective view illustrating an auxiliary pressing jig of the battery pack manufacturing apparatus in FIG. 1.
FIG. 4 is a cross-sectional side view illustrating the auxiliary pressing jig of the battery pack manufacturing apparatus in FIG. 1.
FIG. 5 is a perspective view illustrating a state in which the main pressing jig in FIG. 2 grips a battery unit.
FIG. 6 is an enlarged view illustrating a main pressing block and a main coupling concave-convex portion of the main pressing jig.
FIG. 7 is an enlarged view illustrating a region of the battery unit that faces the main pressing block and the main coupling concave-convex portion of the main pressing jig in FIG. 6 when the main pressing jig grips the battery unit.
FIG. 8 is an enlarged view illustrating a state in which the main pressing jig and the auxiliary pressing jig grip the battery unit.
FIG. 9 is an enlarged view illustrating an auxiliary pressing block and an auxiliary coupling concave-convex portion of the auxiliary pressing jig.
FIG. 10 is an enlarged view illustrating a state in which the auxiliary pressing jig grips the battery unit.
FIG. 11 is a view for explaining a first-first battery unit gripping step and a first battery unit seating step of a battery pack manufacturing method according to the present disclosure.
FIG. 12 is a view for explaining a first main jig releasing step and a first-second battery unit gripping step of the battery pack manufacturing method according to the present disclosure.
FIG. 13 is a view for explaining a second-first battery unit gripping step and a second battery unit seating step of the battery pack manufacturing method according to the present disclosure.
FIG. 14 is a view for explaining a second main jig releasing step and a second-second battery unit gripping step of the battery pack manufacturing method according to the present disclosure.
FIG. 15 is a view for explaining an extension member disposing step of the battery pack manufacturing method according to the present disclosure.
FIG. 16 is a view for explaining a state in which the extension member is coupled to a casing member in the battery pack manufacturing method according to the present disclosure.
FIG. 17 is a view illustrating a state made before the extension member is inserted into an accommodation space of the casing member in the extension member disposing step of the battery pack manufacturing method according to the present disclosure.
FIG. 18 is a top plan view illustrating a state made after the extension member is inserted into the accommodation space of the casing member in the extension member disposing step of the battery pack manufacturing method according to the present disclosure.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Throughout the specification, unless explicitly described to the contrary, the word "comprise" and variations such as "comprises" or "comprising" will be understood to imply the inclusion of stated elements but not the exclusion of any other elements. In addition, the terms "unit", "-er", "-or", and "module" described in the specification mean units for processing at least one function and operation, and can be implemented by hardware components or software components and combinations thereof.

Further, the control logic of the present disclosure may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

Hereinafter, a battery pack manufacturing apparatus and a battery pack manufacturing method according to the present disclosure will be described with reference to the drawings.

### Battery Pack Manufacturing Apparatus

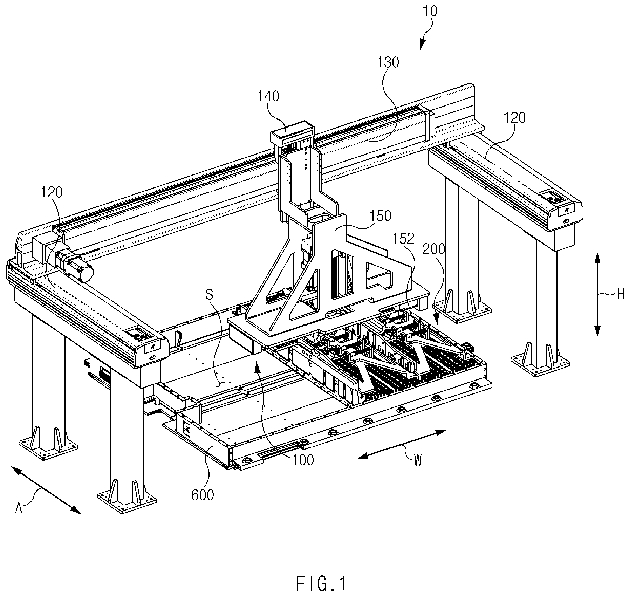

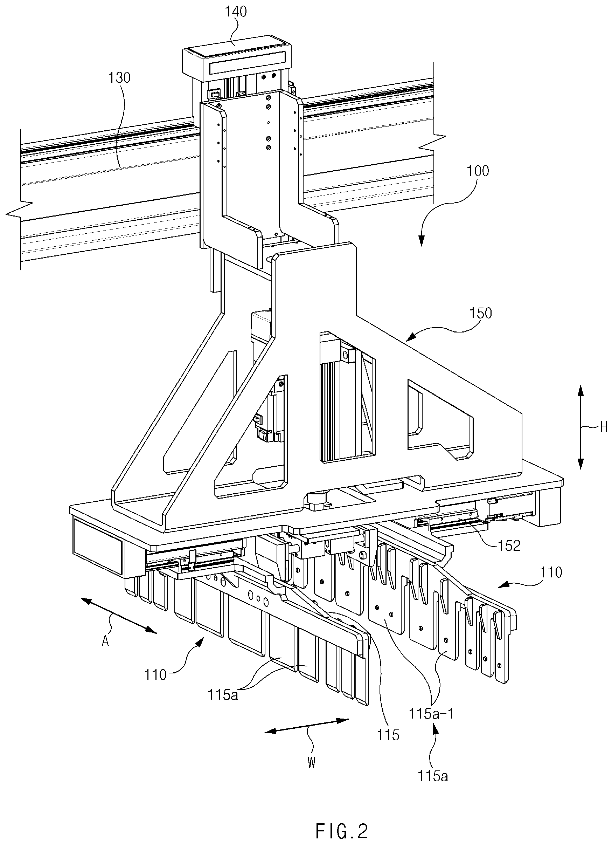

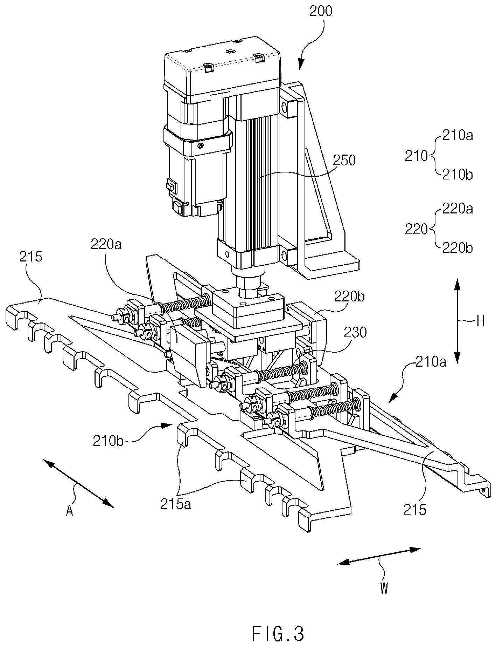

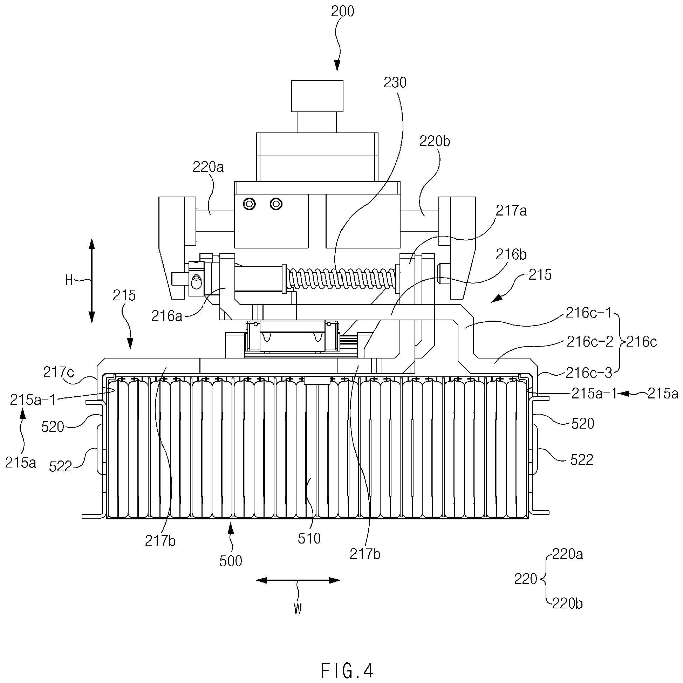

FIG. 1 is a perspective view illustrating a battery pack manufacturing apparatus according to the present disclosure, and FIG. 2 is a perspective view illustrating a main pressing jig of the battery pack manufacturing apparatus in FIG. 1. FIG. 3 is a perspective view illustrating an auxiliary pressing jig of the battery pack manufacturing apparatus in FIG. 1, and FIG. 4 is a cross-sectional side view illustrating the auxiliary pressing jig of the battery pack manufacturing apparatus in FIG. 1.

With reference to FIGS. 1 to 4, a battery pack manufacturing apparatus 10 according to the present disclosure may include a main pressing jig 100 and an auxiliary pressing jig 200. The main pressing jig 100 and the auxiliary pressing jig 200 may be configured to grip a battery unit by pressing two opposite surfaces of the battery unit to be described below. However, the main pressing jig 100 may be configured to transfer the battery unit while gripping the battery unit and seat the battery unit on a casing member to be described below, whereas the auxiliary pressing jig 200 may be configured to press the two opposite surfaces of the battery unit to maintain stacked structures of the components of the battery unit seated on the casing member.

The main pressing jig 100 may include two main pressing parts 110 provided to face each other in a first direction W and configured to be movable toward or away from each other. The two main pressing parts 110 may include components configured to be tightly attached to the two opposite surfaces of the battery unit. In addition, the auxiliary pressing jig 200 may include two auxiliary pressing parts 210 provided to face each other in the first direction W and configured to be movable toward or away from each other. The two auxiliary pressing parts 210 may include components configured to be tightly attached to the two opposite surfaces of the battery unit. In addition, the auxiliary pressing jig 200 may be provided at one side of the main pressing jig 100.

Meanwhile, the main pressing jig 100 and the auxiliary pressing jig 200 of the battery pack manufacturing apparatus 10 according to the present disclosure may be configured to simultaneously press the two opposite surfaces of the battery unit. In order to achieve the above-mentioned object, the main pressing jig 100 and the auxiliary pressing jig 200 may be configured such that the main pressing part 110 passes through the auxiliary pressing part 210 when the main pressing part 110 or the auxiliary pressing part 210 moves in the first direction W in a state in which the main pressing part 110 and the auxiliary pressing part 210 are disposed to overlap each other in a second direction H intersecting the first direction W. This configuration may be understood as a configuration in which the main pressing jig 100 and the auxiliary pressing jig 200 do not interfere with each other when the main pressing jig 100 and the auxiliary pressing jig 200 press the two opposite surfaces of the battery unit. More specifically, a region in which the main pressing parts 110 press the battery unit to grip the battery unit may not overlap a region in which the auxiliary pressing parts 210 press the battery unit to grip the battery unit. Meanwhile, with reference to FIGS. 1 to 4, the first direction W may be a leftward/rightward direction, and the second direction H may be an upward/downward direction.

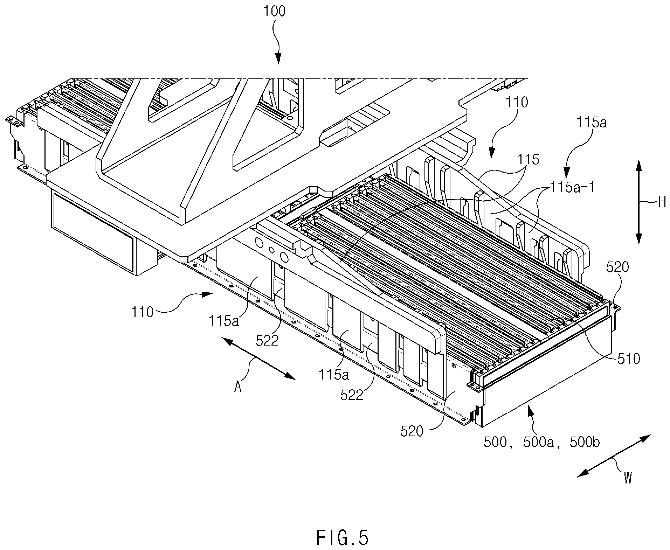

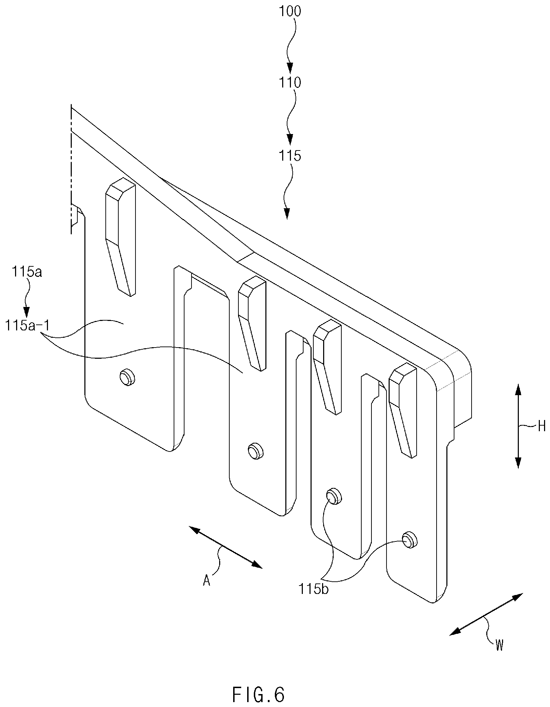

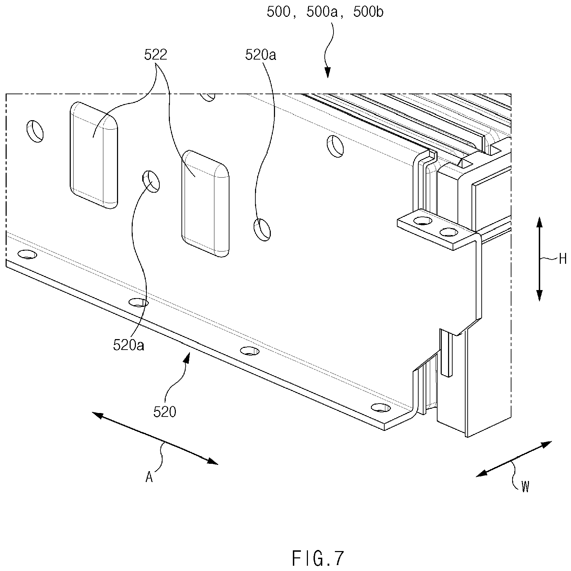

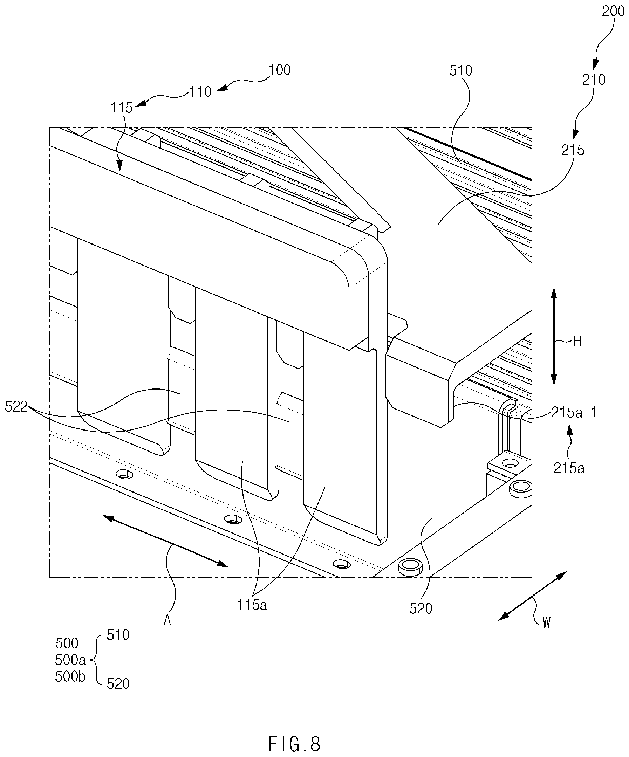

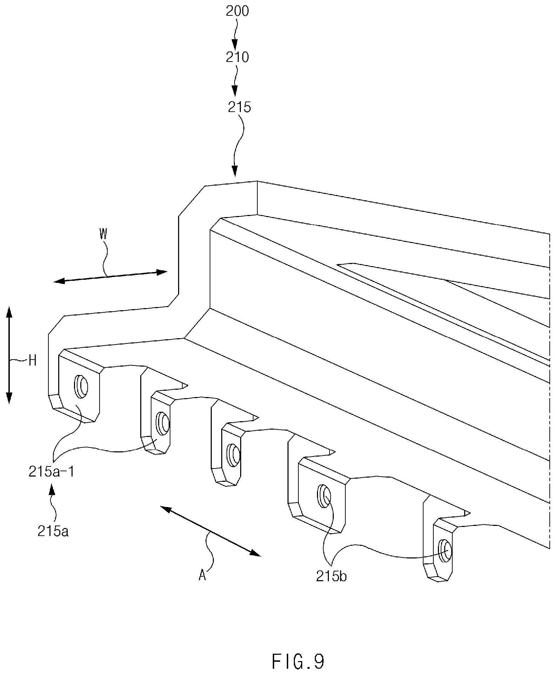

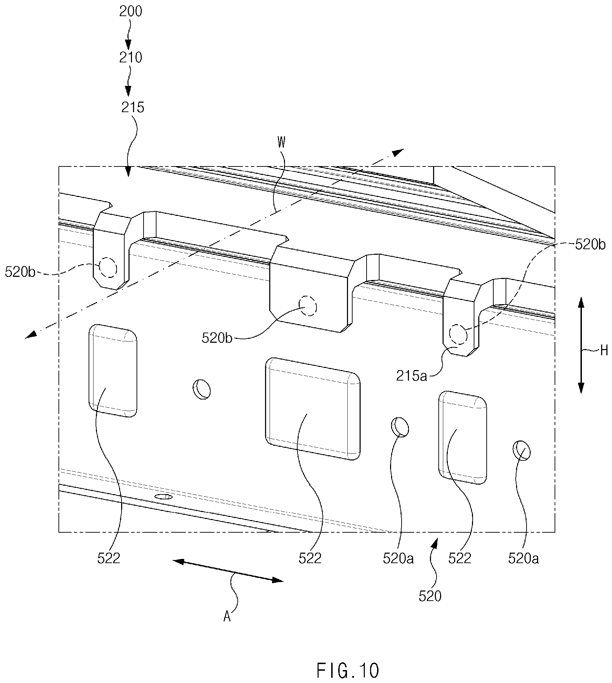

Hereinafter, the features of the main pressing part and the auxiliary pressing part for achieving the above-mentioned object will be described in detail. FIG. 5 is a perspective view illustrating a state in which the main pressing jig in FIG. 2 grips the battery unit, and FIG. 6 is an enlarged view illustrating a main pressing block and a main coupling concave-convex portion of the main pressing jig. FIG. 7 is an enlarged view illustrating a region of the battery unit that faces the main pressing block and the main coupling concave-convex portion of the main pressing jig in FIG. 6 when the main pressing jig grips the battery unit, and FIG. 8 is an enlarged view illustrating a state in which the main pressing jig and the auxiliary pressing jig grip the battery unit. FIG. 9 is an enlarged view illustrating an auxiliary pressing block and an auxiliary coupling concave-convex portion of the auxiliary pressing jig, and FIG. 10 is an enlarged view illustrating a state in which the auxiliary pressing jig grips the battery unit.

With reference to FIGS. 5 to 8, the main pressing part 110 may include a main pressing body 115 configured to define a body of the main pressing part. The main pressing body 115 may include main pressing blocks 115a including main pressing surfaces 115a-1 that face the other main pressing part 115 that faces the main pressing body 115 in the first direction W. In particular, the main pressing surface 115a-1 may be configured to be tightly attached directly to a lateral surface of the battery unit when the main pressing jig 100 is used to grip the battery unit.

Meanwhile, with reference to FIGS. 9 and 10, the auxiliary pressing part 210 may include an auxiliary pressing body 215 configured to define a body of the auxiliary pressing part. The auxiliary pressing body 215 may include auxiliary pressing blocks 215a including auxiliary pressing surfaces 215a-1 that face the other auxiliary pressing part 215 faces the auxiliary pressing body 215 in the first direction W. In particular, the auxiliary pressing surface 215a-1 may be configured to be tightly attached directly to the lateral surface of the battery unit when the auxiliary pressing jig 200 is used to grip the battery unit.

Meanwhile, as described above, the main pressing jig 100 may be configured to transfer the battery unit while gripping the battery unit and seat the battery unit on the casing member to be described below, and the auxiliary pressing jig 200 may be configured to press the two opposite surfaces of the battery unit to maintain the stacked structures of the components of the battery unit seated on the casing member. In this case, a gripping force applied to the battery unit by the main pressing parts 110 needs to be relatively higher than a gripping force applied to the battery unit by the auxiliary pressing parts 210. Therefore, according to the present disclosure, a width of the main pressing block 115a in the second direction H may be larger than a width of the auxiliary pressing block 215a in the second direction H.

Meanwhile, the main pressing block 115a may be provided as a plurality of main pressing blocks 115a in one main pressing part 110, and the auxiliary pressing block 215a may be provided as a plurality of auxiliary pressing blocks 215a in one auxiliary pressing part 210.

More specifically, with reference to the above-mentioned drawings, the plurality of main pressing blocks 115a may be provided to be spaced apart from one another in a third direction A intersecting the first direction W and the second direction H, and the plurality of auxiliary pressing blocks 215a may be provided to be spaced apart from one another in the third direction A. For example, the third direction A may be a forward/rearward direction.

In this case, according to the present disclosure, when the plurality of main pressing blocks 115a and the plurality of auxiliary pressing blocks 215a are disposed to overlap one another in the second direction H, the plurality of main pressing blocks 115a and the plurality of auxiliary pressing blocks 215a may not overlap one another in the third direction A when the battery pack manufacturing apparatus 10 is viewed in a state in which the plurality of main pressing blocks 115a and the plurality of auxiliary pressing blocks 215a are spaced apart from one another in the first direction W. Therefore, the main pressing block 115a and the auxiliary pressing block 215a may not interfere with each other when the main pressing block 115a and the auxiliary pressing block 215a move relative to each other in the first direction W during the process of gripping the battery unit. For example, the plurality of main pressing blocks 115a and the plurality of auxiliary pressing blocks 215a may be provided to be spaced apart from one another in the third direction A. More particularly, as illustrated in FIG. 8, the main pressing blocks 115a and the auxiliary pressing blocks 215a may be disposed alternately in the third direction A.

Meanwhile, as described above, according to the present disclosure, a gripping force applied to the battery unit by the main pressing parts 110 may be relatively higher than a gripping force applied to the battery unit by the auxiliary pressing parts 210. In order to achieve the above-mentioned object, according to the present disclosure, a sum of widths of the plurality of main pressing blocks 115a in the third direction A in one main pressing part 110 may be larger than a sum of widths of the plurality of auxiliary pressing blocks 215a in the third direction A in one auxiliary pressing part 210.

In addition, the battery pack manufacturing apparatus 10 according to the present disclosure may further include a configuration for increasing the gripping forces by preventing the battery unit from slipping from the main pressing parts 110 or the auxiliary pressing parts 210 when the main pressing parts 110 or the auxiliary pressing parts 210 grip the battery unit.

That is, with reference to FIG. 6, the main pressing part 110 may further include main coupling concave-convex portions 115b having shapes protruding or recessed from the main pressing surfaces 115a-1 of the main pressing blocks 115a. With reference to FIG. 9, the auxiliary pressing part 210 may further include auxiliary coupling concave-convex portions 215b having shapes protruding or recessed from the auxiliary pressing surfaces 215a-1 of the auxiliary pressing blocks 215a. For example, FIGS. 6 and 9 illustrate that the main coupling concave-convex portion 115b and the auxiliary coupling concave-convex portion 215b have shapes respectively protruding from the main pressing surface 115a-1 and the auxiliary pressing surface 215a-1. However, alternatively, the main coupling concave-convex portion 115b and the auxiliary coupling concave-convex portion 215b may have shapes respectively recessed from the main pressing surface 115a-1 and the auxiliary pressing surface 215a-1.

In order to improve the gripping forces, the main coupling concave-convex portions 115b may be respectively provided on the plurality of main pressing blocks 115a, and the auxiliary coupling concave-convex portions 215b may be respectively provided on the plurality of auxiliary pressing blocks 215a.

Meanwhile, according to the present disclosure, a width in the third direction A of at least some of the plurality of main pressing blocks 115a provided in one main pressing part 110 may be different from a width in the third direction A of some of the remaining main pressing blocks 115a among the plurality of main pressing blocks 115a.

For example, with reference to FIGS. 2 and 5, a width in the third direction A of the main pressing block 115a, which is disposed to be relatively close to a central region based on the third direction A between the two main pressing blocks 115a in the main pressing part 110, may be equal to or larger than a width in the third direction A of the main pressing block 115a disposed to be relatively distant from the central region based on the third direction A between the two main pressing blocks in the main pressing part 110. This configuration may be understood as a configuration in which the widths of the main pressing blocks 115a in the third direction A generally tend to increase toward the central region of the main pressing part 110 based on the third direction A. In this case, the gripping force in the central region of the battery unit based on the third direction A relatively increases when the main pressing jig 100 grips the battery unit, such that the battery unit may be more stably gripped.

Meanwhile, the two main pressing parts 110 provided in the main pressing jig 100 of the battery pack manufacturing apparatus 10 according to the present disclosure may have an approximately symmetric shape. Alternatively, the main pressing bodies 115, which are respectively provided in at least two main pressing parts 110, may have a symmetric shape. In contrast, the two auxiliary pressing parts 210 provided in the auxiliary pressing jig 200 may not have a symmetric shape. Hereinafter, the shapes of the two auxiliary pressing parts 210 provided in the auxiliary pressing jig 200 will be described in detail.

With reference to FIG. 4, the two auxiliary pressing parts 210 provided in the auxiliary pressing jig 200 may be a first auxiliary pressing part 210a and a second auxiliary pressing part 210b. The first auxiliary pressing part 210a and the second auxiliary pressing part 210b may each include the auxiliary pressing body 215 including the auxiliary pressing blocks 215a. The auxiliary pressing bodies 215 may define bodies of the first auxiliary pressing part 210a and the second auxiliary pressing part 210b.

Meanwhile, the auxiliary pressing body 215 of the first auxiliary pressing part 210a may be divided into a plurality of regions. More specifically, the auxiliary pressing body 215 of the first auxiliary pressing part 210a may include a first-first extension region 216a provided at one side (a left side based on FIG. 4) of the auxiliary pressing jig 200 based on the first direction W and extending in the second direction H (downward based on FIG. 4), a first-second extension region 216b extending from an end (a lower end based on FIG. 4) of the first-first extension region 216a based on the second direction H to the other side based on the first direction W (a right side based on FIG. 4), and a first-third extension region 216c extending from the first-second extension region 216b and including the auxiliary pressing blocks 215a.

In addition, the auxiliary pressing body 215 of the second auxiliary pressing part 210b may include a second-first extension region 217a provided at the other side (a right side based on FIG. 4) of the auxiliary pressing jig 200 based on the first direction W and extending in the second direction H (downward based on FIG. 4), a second-second extension region 217b extending from an end (a lower end based on FIG. 4) of the second-first extension region 217a based on the second direction H to one side based on the first direction W, and a second-third extension region 217c extending from the second-second extension region 217b and including the auxiliary pressing blocks 215a.

In this case, according to the present disclosure, at least a part of the first-second extension region 216b and at least a part of the second-second extension region 217b may be provided to face each other in the second direction H. This configuration may be understood as a configuration in which the auxiliary pressing body 215b of the first auxiliary pressing part 210a and the auxiliary pressing body 215b of the second auxiliary pressing part 210b extend toward each other and thus have shapes intersecting each other. For example, as illustrated in FIG. 4, an extension length of the second-first extension region 217a in the second direction H may be longer than an extension length of the first-first extension region 216a in the second direction H, and the first-second extension region 216b may be positioned above the second-second extension region 217b.

Meanwhile, unlike the above-mentioned two main pressing parts 110, the two auxiliary pressing parts 210 may have an asymmetric shape.

More specifically, the first-third extension region 216c may include a first-third-first extension region 216c-1 extending in the second direction H (downward based on FIG. 4) from an end (a right end based on FIG. 4) of the first-second extension region 216b based on the first direction W, a first-third-second extension region 216c-2 extending in the first direction W (rightward based on FIG. 4) from an end (a lower end based on FIG. 4) of the first-third-first extension region 216c-1 based on the second direction H, and a first-third-third extension region 216c-3 extending in the second direction H (downward based on FIG. 4) from an end (a right end based on FIG. 4) of the first-third-second extension region 216c-2 based on the first direction W and including the auxiliary pressing surfaces 215a-1. The second-third extension region 217c may extend in the second direction H (downward based on FIG. 4) from an end (a left end based on FIG. 4) of the second-second extension region 217b based on the first direction W and include the auxiliary pressing surfaces 215a-1.

Meanwhile, according to the present disclosure, the auxiliary pressing part 210 may be provided to be attachable to or detachable from the other components of the auxiliary pressing jig 200. That is, according to the present disclosure, at ordinary times, the auxiliary pressing parts 210 are coupled to the other components of the auxiliary pressing jig 200. In case that the auxiliary pressing parts 210 grip the battery unit, the auxiliary pressing parts 210 may be detached from the other components of the auxiliary pressing jig 200.

More specifically, with reference to FIGS. 3 and 4 and the like, the auxiliary pressing jig 200 may further include a cylinder part 220 including a first cylinder part 220a configured to be movable in the first direction W and configured to press the first auxiliary pressing part 210a from the outside based on the first direction W, and a second cylinder part 220b configured to be movable in the first direction W and configured to press the second auxiliary pressing part 210b from the outside based on the first direction W.

More specifically, the first cylinder part 220a may be configured to press the auxiliary pressing body 215 of the first auxiliary pressing part 210a in a direction (rightward based on FIG. 4) toward the second auxiliary pressing part 210b, and the second cylinder part 220b may be configured to press the auxiliary pressing body 215 of the second auxiliary pressing part 210b in a direction (leftward based on FIG. 4) toward the first auxiliary pressing part 210a. In this case, when the first cylinder part 220a presses the first auxiliary pressing part 210a and the second cylinder part 220b presses the second auxiliary pressing part 210b, the auxiliary pressing surfaces 215a-1, which are respectively provided on the first auxiliary pressing part 210a and the second auxiliary pressing part 210b, may move away from each other in the first direction H1.

Meanwhile, the auxiliary pressing jig 200 according to the present disclosure may further include an elastic member 230 configured to press the first auxiliary pressing part 210a and the second auxiliary pressing part 210b in a direction opposite to the direction in which the first cylinder part 220a and the second cylinder part 220b respectively press the first auxiliary pressing part 210a and the second auxiliary pressing part 210b. That is, the elastic member 230 may press the first auxiliary pressing part 210a and the second auxiliary pressing part 210b in a direction in which the auxiliary pressing surface 215a-1 of the first auxiliary pressing part 210a and the auxiliary pressing surface 215a-1 of the second auxiliary pressing part 210b move toward each other.

More specifically, as illustrated in FIG. 4, the elastic member 230 may be provided between the auxiliary pressing body 215 provided in the first auxiliary pressing part 210a and the auxiliary pressing body 215 provided in the second auxiliary pressing part 210b and press the first auxiliary pressing part 210a and the second auxiliary pressing part 210b in a direction in which the first-first extension region 216a and the second-first extension region 217a move away from each other. For example, as illustrated in FIGS. 3 and 4, the elastic member 230 may be provided between the first-first extension region 216a and the second-first extension region 217a and press the first-first extension region 216a and the second-first extension region 217a.

A method of operating the auxiliary pressing jig 200 by using the cylinder part 220 and the elastic member 230 will be described below with reference to the above-mentioned description.

Because the first cylinder part 220a and the second cylinder part 220b are configured to be movable in the first direction W, the first cylinder part 220a and the second cylinder part 220b may move in a direction in which the first cylinder part 220a and the second cylinder part 220b are respectively coupled to or uncoupled from the auxiliary pressing body 215 of the first auxiliary pressing part 210a and the auxiliary pressing body 215 of the second auxiliary pressing part 210b.

In this case, in case that the first cylinder part 220a and the second cylinder part 220b are respectively coupled to the first auxiliary pressing part 210a and the second auxiliary pressing part 210b, the auxiliary pressing body 215 of the first auxiliary pressing part and the auxiliary pressing body 215 of the second auxiliary pressing part may move in the second direction H together with the cylinder part 220. In contrast, in case that the first cylinder part 220a and the second cylinder part 220b are respectively moved away from the first auxiliary pressing part 210a and the second auxiliary pressing part 210b, the auxiliary pressing body 215 of the first auxiliary pressing part and the auxiliary pressing body 215 of the second auxiliary pressing part are in stopped state regardless of the movement of the cylinder part 220 in the second direction H.

That is, according to the present disclosure, the first cylinder part 220a may be configured to be movable between i) a state in which when the first cylinder part 220a moves in the second direction H, the first auxiliary pressing part may also move in the second direction H by means of interference between the auxiliary pressing body 215 of the first auxiliary pressing part 210a and the first cylinder part 220a and ii) a state in which the first cylinder part 220a is spaced apart from the first auxiliary pressing part 210a. Further, the second cylinder part 220b may be configured to be movable between i) a state in which when the second cylinder part 220b moves in the second direction H, the second auxiliary pressing part 210b may also move by means of interference between the auxiliary pressing body 215 of the second auxiliary pressing part 210b and the second cylinder part 220b and ii) a state in which the second cylinder part 220b is spaced apart from the second auxiliary pressing part 210b.

For example, with reference to FIGS. 3 and 4, bracket members having through-holes having shapes formed through the bracket members in the first direction W may be provided on the auxiliary pressing bodies 215 respectively provided in the first auxiliary pressing part 210a and the second auxiliary pressing part 210b, and protruding portions may be respectively provided on the first cylinder part 220a and the second cylinder part 220b so as to be inserted into the through-holes formed in the bracket members. In this case, the cylinder part 220 and the auxiliary pressing part 210 may be coupled when the protruding portion is inserted into the through-hole, and the cylinder part 220 and the auxiliary pressing part 210 may be uncoupled when the protruding portion is moved away from the through-hole. Meanwhile, when the first cylinder part 220a and the second cylinder part 220b respectively press the first auxiliary pressing part 210a and the second auxiliary pressing part 210b, the auxiliary pressing surface 215a-1 provided on the first auxiliary pressing part 210a and the auxiliary pressing surface 215a-1 provided on the second auxiliary pressing part 210b move away from each other.

Meanwhile, when the cylinder part 220 and the auxiliary pressing part 210 are uncoupled, only the elastic member 230 remains as the configuration for pressing the auxiliary pressing body in the first direction W. In this case, because the elastic member 230 applies a force in the direction in which the auxiliary pressing bodies 215, which are respectively provided on the first auxiliary pressing part 210a and the second auxiliary pressing part 210b, move toward each other, the auxiliary pressing surfaces 215a-1, which are respectively provided on the first auxiliary pressing part 210a and the second auxiliary pressing part 210b, move toward each other.

Meanwhile, with reference back to FIGS. 1 to 3, the battery pack manufacturing apparatus 10 according to the present disclosure may further include components configured to allow the main pressing jig 100 and the auxiliary pressing jig 200 to move in the first to third directions.

More specifically, the main pressing jig 100 of the battery pack manufacturing apparatus 10 according to the present disclosure may further include a first rail part 120 fixed with respect to the ground surface and extending in the third direction A, a second rail part 130 coupled to be movable in the third direction A relative to the first rail part 120 and extending in the first direction W, a sliding part 140 coupled to be movable in the first direction W relative to the second rail part 130, and a main movement part 150 coupled to be movable in the second direction H relative to the sliding part 140 and having one side coupled to the main pressing part 110. In this case, a main rail 152 extending in the first direction W may be provided on the main movement part 150. The two main pressing parts 110 may be coupled to be movable in the first direction W relative to the main rail 152.

In addition, the auxiliary pressing jig 200 of the battery pack manufacturing apparatus 10 according to the present disclosure may further include an auxiliary movement part 250 having one side fixed to the main movement part 150, and the other side fixedly coupled to the cylinder part 220. More specifically, the auxiliary movement part 250 may be configured to move the auxiliary pressing part 210 in the second direction H.

With the above-mentioned structure, the main pressing jig 100 and the auxiliary pressing jig 200 may move together in the first to third directions. However, as described above, because the auxiliary pressing part 210 of the auxiliary pressing jig 200 may be provided to be attachable to or detachable from the other components of the auxiliary pressing jig 200, more specifically, the auxiliary movement part 250 or the cylinder part 220, the main pressing jig 100 may move together with the auxiliary movement part 250 and the cylinder part 220 when the auxiliary pressing part 210 is detached from the auxiliary movement part 250 or the cylinder part 220. However, the configuration for moving the main pressing jig 100 and the auxiliary pressing jig 200 in the first to third directions may be configured in various ways without being limited to the above-mentioned configuration.

### Battery Pack Manufacturing Method

Hereinafter, a battery pack manufacturing method according to the present disclosure will be described with reference to the above-mentioned description and the drawings.

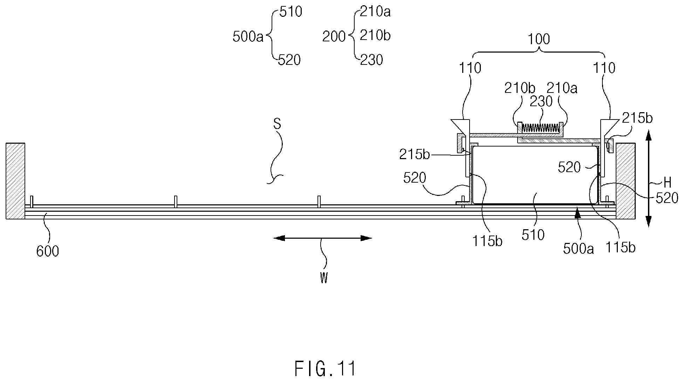

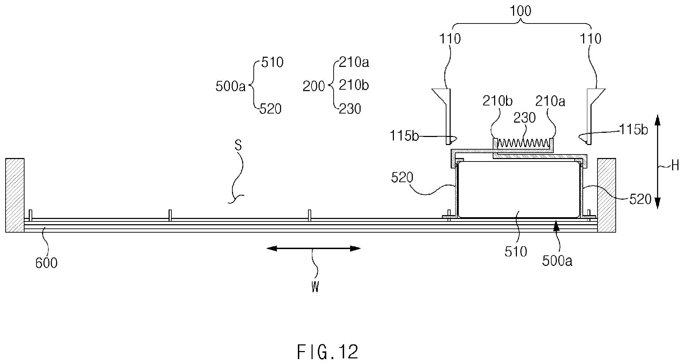

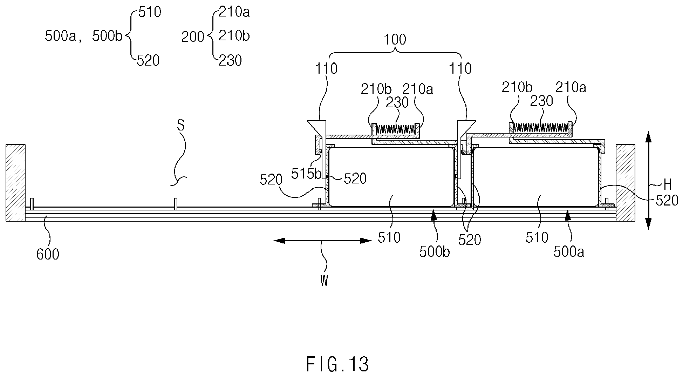

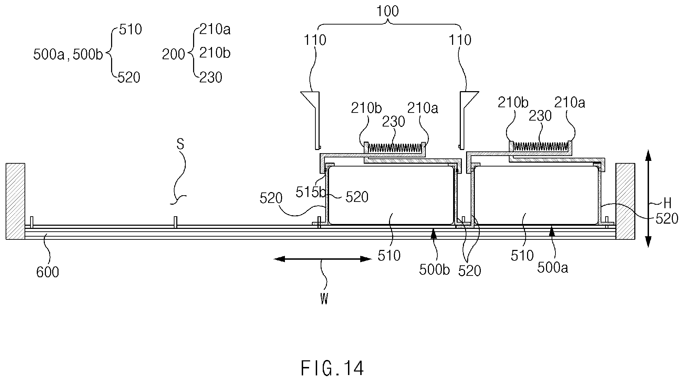

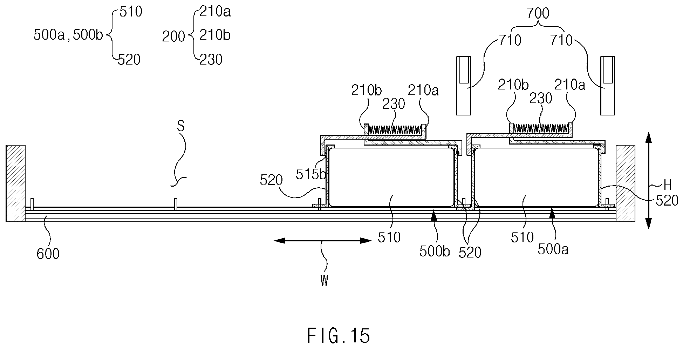

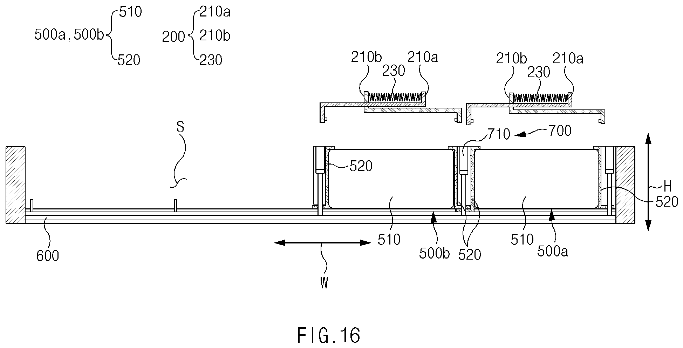

FIG. 11 is a view for explaining a first-first battery unit gripping step and a first battery unit seating step of a battery pack manufacturing method according to the present disclosure, and FIG. 12 is a view for explaining a first main jig releasing step and a first-second battery unit gripping step of the battery pack manufacturing method according to the present disclosure. FIG. 13 is a view for explaining a second-first battery unit gripping step and a second battery unit seating step of the battery pack manufacturing method according to the present disclosure, and FIG. 14 is a view for explaining a second main jig releasing step and a second-second battery unit gripping step of the battery pack manufacturing method according to the present disclosure. FIG. 15 is a view for explaining an extension member disposing step of the battery pack manufacturing method according to the present disclosure, and FIG. 16 is a view for explaining a state in which the extension member is coupled to a casing member in the battery pack manufacturing method according to the present disclosure.

With reference to FIG. 11, the battery pack manufacturing method according to the present disclosure may include a preparation step of preparing a first battery unit 500a and a second battery unit each including a battery stack 510, which has a structure in which a plurality of batteries is stacked, and preparing a casing member 600 having an accommodation space S capable of accommodating the first battery unit and the second battery unit, a first-first battery unit gripping step of gripping the first battery unit 500a by allowing the main pressing surfaces 115a-1 of the main pressing blocks 115a provided in the two main pressing parts 110 to press the two opposite surfaces of the first battery unit 500a by operating the main pressing jig 100 in the direction in which the two main pressing parts 110 move toward each other, and a first battery unit seating step of seating the first battery unit 500a, which is gripped in the first-first battery unit gripping step, on the casing member 600.

In addition, as illustrated in FIG. 12, the battery pack manufacturing method according to the present disclosure may further include a first-second battery unit gripping step of gripping the first battery unit 500a by allowing the auxiliary pressing surfaces 215a-1 of the auxiliary pressing blocks 215a provided in the two auxiliary pressing parts 210a and 210b to press the two opposite surfaces of the first battery unit 500a, which is seated on the casing member 600 in the first battery unit seating step, by operating the auxiliary pressing jig 200 in the direction in which the two auxiliary pressing parts 210a and 210b move toward each other, and a first main jig releasing step of moving the main pressing jig 100 away from the first battery unit 500a by operating the main pressing jig 100 in the direction in which the two main pressing parts 110 move away from each other in the state in which the auxiliary pressing jig 200 grips the first battery unit 500a after the first-second battery unit gripping step. Therefore, in the first main jig releasing step, the state in which the auxiliary pressing jig 200 grips the first battery unit 500a is maintained even though the first main pressing jig 100 moves away from the first battery unit 500a, such that the first battery unit 500a may be accommodated in the casing member 600 while maintaining an original shape in an intact manner.

Meanwhile, according to the present disclosure, the first battery unit 500a and the second battery unit may each further include endplates 520 provided on two opposite surfaces of the battery stack 510 and including first concave-convex portions 520a protruding or recessed from outer surfaces of the endplates 520.

In this case, according to the present disclosure, in the first-first battery unit gripping step, the main coupling concave-convex portion 115b provided on the main pressing part 110 may be inserted into the first concave-convex portion 520a or the first concave-convex portion 520a may be inserted into the main coupling concave-convex portion 115b. For example, as illustrated in FIGS. 6 to 8, in case that the main coupling concave-convex portion 115b has a protruding shape and the first concave-convex portion 520a has a recessed shape, the main coupling concave-convex portion 115b may be inserted into the first concave-convex portion 520a.

Meanwhile, the endplate 520 may further include second concave-convex portions 520b provided separately from the first concave-convex portions 520a and having protruding or recessed shapes. In this case, according to the present disclosure, in the first-second battery unit gripping step, the auxiliary coupling concave-convex portion 215b of the auxiliary pressing part 210 may be inserted into the second concave-convex portion 520b or the second concave-convex portion 520b may be inserted into the auxiliary coupling concave-convex portion 215b. For example, as illustrated in FIGS. 9 and 10, in case that the auxiliary coupling concave-convex portion 215b has a protruding shape and the second concave-convex portion 520b has a recessed shape, the auxiliary coupling concave-convex portion 215b may be inserted into the second concave-convex portion 520b.

In a more preferable example, in case that the second direction H is the upward/downward direction, a region in which the main coupling concave-convex portion 115b is inserted into the first concave-convex portion 520a or the first concave-convex portion 520a is inserted into the main coupling concave-convex portion 115b in the first-first battery unit gripping step may be positioned below a region in which the auxiliary coupling concave-convex portion 215b is inserted into the second concave-convex portion 520b or the second concave-convex portion 520b is inserted into the auxiliary coupling concave-convex portion 215b in the first-second battery unit gripping step.

Meanwhile, with reference to FIGS. 5, 7, 8, and 10 and the like, the endplate 520, which is provided on each of the first and second battery units, may have a plurality of guide protruding regions 522 having shapes protruding outward. The plurality of guide protruding regions 522 may be configured to guide an extension member, which is to be described below, when the extension member is inserted to face the lateral surface of the battery unit.

In this case, according to the present disclosure, in the first-first battery unit gripping step and the first-second battery unit gripping step, the main pressing part 110 and the auxiliary pressing part 210 may press the endplate in a state in which the main pressing part 110 and the auxiliary pressing part 210 in a state in which the main pressing part 110 and the auxiliary pressing part 210 avoid a region of the endplate 520 in which the guide protruding region 522 is formed.

More specifically, in the first-first battery unit gripping step, the main pressing block 115a may press a section of the lateral surface of the endplate 520 provided between the plurality of guide protruding regions 522. More particularly, in the first-first battery unit gripping step, the region in which the main coupling concave-convex portion 115b is inserted into the first concave-convex portion 520a of the endplate 520 or the first concave-convex portion 520a is inserted into the main coupling concave-convex portion 115b may be formed in the section between the plurality of guide protruding regions 522.

In contrast, in the first-second battery unit gripping step, the auxiliary pressing block 215a may press a section of the lateral surface of the endplate 520 disposed above the plurality of guide protruding regions 522. More particularly, in the first-second battery unit gripping step, a region in which the auxiliary pressing block 215a presses the lateral surface of the endplate 520 may be formed in the upper section of the plurality of guide protruding regions 522 and formed within a width of the guide protruding region 522 in the first direction W. Therefore, interference between the extension member and the auxiliary pressing block 215a may be prevented in an extension member disposing step to be described below.

Meanwhile, the battery pack manufacturing method according to the present disclosure may further include a step of seating the second battery unit on the casing member.

More specifically, with reference to FIG. 13, the battery pack manufacturing method according to the present disclosure may further include a second-first battery unit gripping step of gripping a second battery unit 500b by allowing the main pressing blocks 115a provided in the two main pressing parts 110 to press two opposite surfaces of the second battery unit 500b by operating the main pressing jig 100 in the direction in which the two main pressing parts 110 move toward each other, a second battery unit seating step of seating the second battery unit 500b, which is gripped in the second-first battery unit gripping step, on the casing member 600, and a second-second battery unit gripping step of gripping the second battery unit 500b by allowing the auxiliary pressing blocks 215a provided in the two auxiliary pressing parts 210a and 210b to press the two opposite surfaces of the second battery unit 500b, which is seated on the casing member 600 in the second battery unit seating step, by operating the auxiliary pressing jig 200 in the direction in which the two auxiliary pressing parts 210a and 210b move toward each other. In this case, the main pressing jig 100, which grips the second battery unit 500b in the second-first battery unit gripping step and the second battery unit seating step, may be identical in configuration to the main pressing jig moved away from the first battery unit 500a in the first main jig releasing step. In contrast, the auxiliary pressing jig 200, which grips the second battery unit 500b in the second-second battery unit gripping step, may be different in configuration from the auxiliary pressing jig that grips the first battery unit 500a in the first-second battery unit gripping step.

Meanwhile, with reference to FIG. 14, the battery pack manufacturing method according to the present disclosure may further include a second main jig releasing step of moving the main pressing jig 100 away from the second battery unit 500b by operating the main pressing jig 100 in the direction in which the two main pressing parts 110 move away from each other in the state in which the auxiliary pressing jig 200 grips the second battery unit 500b after the second-second battery unit gripping step.

In addition, with reference to FIG. 15, the battery pack manufacturing method according to the present disclosure may further include an extension member disposing step of disposing an extension member 700 between the first battery unit 500a and the second battery unit 500b so that the extension member 700 supports the lateral surface of the first battery unit 500a and the lateral surface of the second battery unit 500b.

In addition, with reference to FIG. 16, the battery pack manufacturing method according to the present disclosure may further include an auxiliary jig releasing step of moving the auxiliary pressing jig 200, which grips the first battery unit 500a, and the auxiliary pressing jig 200, which grips the second battery unit 500b, respectively away from the first battery unit 500a and the second battery unit 500b after the extension member disposing step.

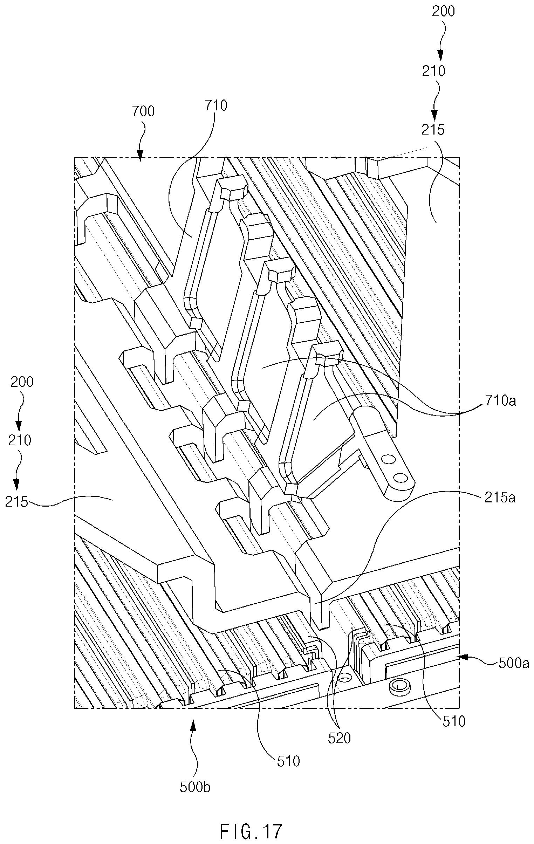

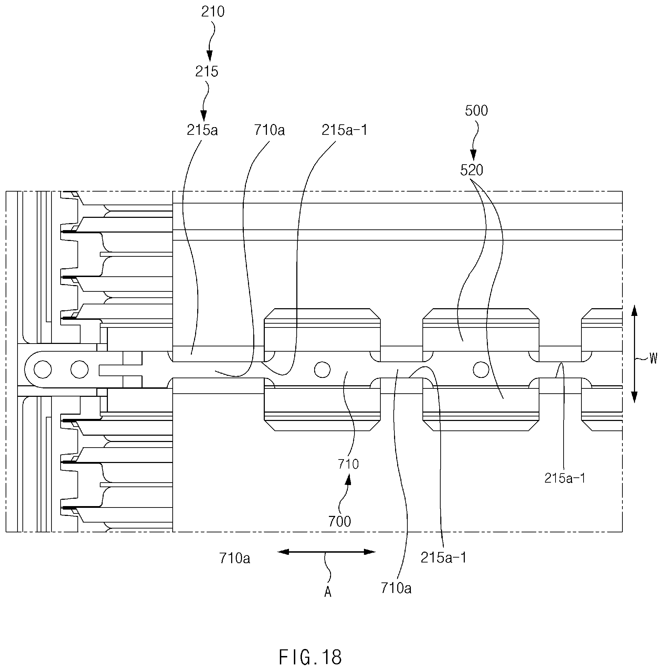

FIG. 17 is a view illustrating a state made before the extension member is inserted into the accommodation space of the casing member in the extension member disposing step of the battery pack manufacturing method according to the present disclosure, and FIG. 18 is a top plan view illustrating a state made after the extension member is inserted into the accommodation space of the casing member in the extension member disposing step of the battery pack manufacturing method according to the present disclosure.

According to the present disclosure, a groove region 710a having a recessed shape may be formed in a lateral surface of an extension member body region 710 of the extension member 700. In this case, as illustrated in FIGS. 17 and 18, in the extension member disposing step, the groove region 710a of the extension member 700 may be provided to face the auxiliary pressing block 215a of the auxiliary pressing jig 200. That is, because the groove region 710a is a region of the extension member 700 that has a relatively small thickness, the extension member 700 may be inserted into the casing member 600 without physically interfering with the auxiliary pressing jig 200 even in the state in which the auxiliary pressing jig 200 grips the battery unit.

More particularly, in the extension member disposing step, a minimum value of a width in the third direction A of the groove region 710a formed in the extension member 700 may be equal to or larger than a maximum value of a width in the third direction A of the auxiliary pressing block 215a that faces the groove region 710a.

The present disclosure has been described with reference to the limited embodiments and the drawings, but the present disclosure is not limited thereby. The present disclosure may be carried out in various forms by those skilled in the art, to which the present disclosure pertains, within the technical spirit of the present disclosure and the scope equivalent to the appended claims.

## Claims

1. A battery pack manufacturing apparatus comprising:
a main pressing jig comprising two main pressing parts provided to face each other in a first direction and configured to be movable toward or away from each other; and
an auxiliary pressing jig provided at one side of the main pressing jig and comprising two auxiliary pressing parts provided to face each other in the first direction and configured to be movable toward or away from each other,
wherein the main pressing jig and the auxiliary pressing jig are configured such that the main pressing part passes through the auxiliary pressing part when the main pressing part or the auxiliary pressing part moves in the first direction in a state in which the main pressing part and the auxiliary pressing part are disposed to overlap each other in a second direction intersecting the first direction.

2. The battery pack manufacturing apparatus of claim 1, wherein the main pressing part comprises a main pressing block including a main pressing surface that faces the other main pressing part that faces the main pressing part in the first direction,
wherein the auxiliary pressing part comprises an auxiliary pressing block including an auxiliary pressing surface that faces the other auxiliary pressing part that faces the auxiliary pressing part in the first direction, and
wherein a width of the main pressing block in the second direction is larger than a width of the auxiliary pressing block in the second direction.

3. The battery pack manufacturing apparatus of claim 2, wherein the main pressing block is provided as a plurality of main pressing blocks spaced apart from one another in a third direction intersecting the first direction and the second direction,
wherein the auxiliary pressing block is provided as a plurality of auxiliary pressing blocks spaced apart from one another in the third direction, and
wherein the plurality of main pressing blocks and the plurality of auxiliary pressing blocks are provided so as not to overlap one another in the third direction when the battery pack manufacturing apparatus is viewed in a state in which the plurality of main pressing blocks and the plurality of auxiliary pressing blocks are spaced apart from one another in the first direction when the plurality of main pressing blocks and the plurality of auxiliary pressing blocks are disposed to overlap one another in the second direction.

4. The battery pack manufacturing apparatus of claim 3, wherein the main pressing blocks and the auxiliary pressing blocks are disposed alternately in the third direction.

5. The battery pack manufacturing apparatus of claim 3 or 4, wherein a sum of widths of the plurality of main pressing blocks in the third direction is larger than a sum of widths of the plurality of auxiliary pressing blocks in the third direction.

6. The battery pack manufacturing apparatus of one of claims 3-5, wherein the main pressing part further comprises a main coupling concave-convex portion having a shape protruding or recessed from the main pressing surface of the main pressing block.

7. The battery pack manufacturing apparatus of one of claims 3-6, wherein the auxiliary pressing part further comprises an auxiliary coupling concave-convex portion having a shape protruding or recessed from the auxiliary pressing surface of the auxiliary pressing block.

8. The battery pack manufacturing apparatus of claim 6 or of claim 7 provided that in combination with claim 6, wherein the main coupling concave-convex portion is provided on each of the plurality of main pressing blocks.

9. The battery pack manufacturing apparatus of claim 7 or of claim 8 provided that in combination with claim 7, wherein the auxiliary coupling concave-convex portion is provided on each of the plurality of auxiliary pressing blocks.

10. The battery pack manufacturing apparatus of one of claims 3-9, wherein a width in the third direction of the main pressing block provided to be relatively close to a central region based on the third direction between the two main pressing blocks in the main pressing part is equal to or larger than a width in the third direction of the main pressing block provided to be relatively distant from the central region based on the third direction between the two main pressing blocks in the main pressing part.

11. The battery pack manufacturing apparatus of one of claims 2-10, wherein the two auxiliary pressing parts are a first auxiliary pressing part and a second auxiliary pressing part,
wherein the first auxiliary pressing part and the second auxiliary pressing part each comprise an auxiliary pressing body comprising the auxiliary pressing block,
wherein the auxiliary pressing body of the first auxiliary pressing part comprises:
a first-first extension region provided at one side of the auxiliary pressing jig based on the first direction and extending in the second direction;
a first-second extension region extending from an end of the first-first extension region based on the second direction to the other side based on the first direction; and
a first-third extension region extending from the first-second extension region and comprising the auxiliary pressing block, and
wherein the auxiliary pressing body of the second auxiliary pressing part comprises:
a second-first extension region provided at the other side of the auxiliary pressing jig based on the first direction and extending in the second direction;
a second-second extension region extending from an end of the second-first extension region based on the second direction to one side based on the first direction; and
a second-third extension region extending from the second-second extension region and comprising the auxiliary pressing block.

12. The battery pack manufacturing apparatus of claim 11, wherein at least a part of the first-second extension region and at least a part of the second-second extension region are provided to face each other in the second direction.

13. The battery pack manufacturing apparatus of claim 11 or 12, wherein the first-third extension region comprises:
a first-third-first extension region extending in the second direction from an end of the first-second extension region based on the first direction;
a first-third-second extension region extending in the first direction from an end of the first-third-first extension region based on the second direction; and
a first-third-third extension region extending in the second direction from an end of the first-third-second extension region based on the first direction and comprising the auxiliary pressing surface.

14. The battery pack manufacturing apparatus of one of claims 11-13, wherein the second-third extension region extends in the second direction from an end of the second-second extension region based on the first direction and comprises the auxiliary pressing surface.

15. The battery pack manufacturing apparatus of one of claims 11-14, wherein the auxiliary pressing jig further comprises a cylinder part comprising:
a first cylinder part configured to be movable in the first direction and configured to press the first auxiliary pressing part from the outside based on the first direction; and
a second cylinder part configured to be movable in the first direction and configured to press the second auxiliary pressing part from the outside based on the first direction.
